# EUROPEAN PATENT APPLICATION

(11) **EP 4 570 077 A1**
(43) Date of publication of application: **18.06.2025**
(21) Application number: 24219675.6
(22) Date of filing: 13.12.2024
(51) Int. Cl.: A23K 10/18, A23K 20/158, A23K 20/174, A23K 40/25, A23K 40/30, A23K 50/40

(54) **FEED PELLETS TO IMPROVE INTESTINAL HEALTH IN DOGS AND CATS**

(30) Priority: 14.12.2023 BE 202306009
(71) Applicant: United Petfood Producers NV, 9042 Gent (BE)
(72) Inventor: LAMMENS, Mieke Alida M, 9042 Gent (BE)
(74) Representative: Brantsandpatents bv

(57) **Abstract**

The present invention relates to feed pellets for pets, such as dogs or cats, comprising a feed composition, wherein the feed composition is extruded into porous feed granules, wherein the porous feed granules are enveloped by one or more coating layers, wherein the one or more coating layers comprise an oil/fat mixture and a probiotic, which are evenly distributed across the porous volume of the entire feed granule, and wherein the feed composition further comprises a prebiotic and one or more fat-soluble vitamins wherein the feed composition further comprises a carrier material, wherein the carrier material functions at least as a carrier material for the prebiotic and wherein the carrier material is a clay mineral selected from the group of phyllosilicates. The present invention also relates to a method for producing feed pellets for animals and the use of the feed pellets to improve intestinal health in dogs or cats.

## Description

### TECHNICAL FIELD

The invention relates to feed pellets for pets, such as dogs or cats, to improve intestinal health in dogs or cats and a method for producing such feed pellets. More specifically, the invention relates to feed pellets comprising a prebiotic, a probiotic, fat-soluble vitamins and a clay mineral selected from the group of phyllosilicates.

### PRIOR ART

Adding probiotics to a feed composition can improve the intestinal health of pets and therefore reduce the risk of disease and infection. In addition, combining a probiotic and a prebiotic has a synergistic effect on the general health, and in particular the intestinal health, of the animal. A probiotic provides important microorganisms that support intestinal health, while a prebiotic supports these microorganisms in their growth and metabolic functions. The presence of both a pro- and prebiotic also improves the digestibility of the feed composition. Because prebiotics enhance the efficacy of probiotics, they should be used together with probiotics whenever possible.

US8444967 describes a method for treating, among other things, gastrointestinal problems, where both a formulation of a dry powder form of probiotic bacteria and a prebiotic are administered. The prebiotic can first be adsorbed onto an adsorbing compound or composition, such as sodium bentonite. In US8444967, this combination of prebiotic and adsorbing compound is filled into hard capsules suitable for use in dietary supplements.

The combination of a probiotic and a prebiotic specifically in animal feed is known from the prior art and is described, among other things, in BE1026379. BE1026379 describes a feed composition for animals with a probiotic and a prebiotic, more specifically the feed composition consists of extruded, porous feed granules surrounded by a coating with at least two coating layers: a first coating layer comprising an oil/fat mixture enclosed by a second coating layer comprising the probiotic. The coating layers are applied through a vacuum coating process which ensures that the ingredients of the coating are drawn deep into the feed granules. Extruded pellets have a very porous internal structure. However, the obtained pellets can exhibit a significant quality defect: the leakage of oil/fat over time. Since fat-soluble vitamins are dissolved in the oil/fat, the leakage of this oil/fat also removes the fat-soluble vitamins from the porous feed granules. These fat-soluble vitamins, particularly vitamin D, play an important role in gut health, among other things. A deficiency in vitamin D, for example, not only affects the gut microbiome but also the health of the intestinal wall.

The present invention aims to find a solution for at least some of the above problems.

### SUMMARY OF THE INVENTION

The invention relates to feed pellets according to claim 1. More specifically, the invention concerns feed pellets for pets, such as dogs or cats, comprising a feed composition, wherein the feed composition is extruded into porous feed granules, wherein the porous feed granules are enveloped by one or more coating layers, wherein the one or more coating layers comprise an oil/fat mixture and a probiotic, which are evenly distributed over the porous volume of the entire feed granule, and wherein the feed composition further comprises a prebiotic and one or more fat-soluble vitamins, wherein the feed composition further comprises a carrier material, wherein the carrier material functions at least as a carrier material for the prebiotic and wherein the carrier material is a clay mineral selected from the group of phyllosilicates.

The feed pellets according to the present invention make it possible to ensure an optimal concentration of the various active ingredients and thus guarantee the quality of the feed granules over a longer period. The inclusion of a clay mineral selected from the group of phyllosilicates ensures optimal retention of, among other things, minerals, vitamins (particularly fat-soluble vitamins), and the prebiotic. Moreover, by incorporating the probiotic in a coating, the probiotic remains viable, even during long-term storage. In the present invention, the probiotic has also penetrated to the core of the porous feed granule and is evenly distributed over the entire volume of it. This has the advantage that the probiotic comes into direct contact with the nutritional components present in the feed granule, which supports the viability of the probiotic. As a result, the probiotic remains intact when ingested in the gastrointestinal tract of animals. By providing such an optimal concentration of various active ingredients that play a role in intestinal health (prebiotic, probiotic, fat-soluble vitamins, and a clay mineral that functions as a carrier and as an additive to promote intestinal health), the feed pellets according to the present invention offers optimal support for intestinal health.

Preferred embodiments of the feed pellets are described in claims 2 to 11.

In a next aspect, the invention relates to a method for producing feed pellets for animals according to claim 12. More specifically, the invention concerns a method for producing feed pellets for animals, wherein the feed pellets comprise a probiotic, a prebiotic, and fat-soluble vitamins, wherein meat is mixed with a premix into a feed composition, wherein the premix comprises the prebiotic adsorbed onto a clay mineral selected from the group of phyllosilicates and wherein the mixture is extruded. In a preferred embodiment, the extruded porous feed granules are coated with one or more coating layers comprising an oil/fat mixture and the probiotic, wherein these one or more coating layers are applied around the feed granules under a vacuum atmosphere.

In a final aspect, the invention relates to the use of the aforementioned feed pellets to improve intestinal health in dogs or cats.

### DETAILED DESCRIPTION

The invention relates to feed pellets to improve intestinal health in dogs or cats and a method for producing such feed pellets. More specifically, the invention concerns feed pellets comprising a feed composition, wherein the feed composition is extruded into porous feed granules, wherein the porous feed granules are enveloped by one or more coating layers, wherein the one or more coating layers comprise an oil/fat mixture and a probiotic, which are evenly distributed over the porous volume of the entire feed granule, and wherein the feed composition further comprises a prebiotic and one or more fat-soluble vitamins, wherein the feed composition further comprises a carrier material, wherein the carrier material functions at least as a carrier material for the prebiotic and wherein the carrier material is a clay mineral selected from the group of phyllosilicates.

Combining a probiotic, a prebiotic, and fat-soluble vitamins has a synergistic effect on the general health, and in particular on the intestinal health, of the animal. The porous feed granules according to the present invention also comprise a clay mineral selected from the group of phyllosilicates, which makes it possible to ensure the quality of the feed granules, both over shorter and longer periods.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The term "feed composition" refers to a mixture which includes nutritionally valuable components for feeding an animal. The feed composition is converted into so-called "feed pellets" after a number of production steps. In the present invention, this feed composition is, among other things, also extruded, dried, and provided with a coating. These feed pellets are dry pellets, also called "feed granules" which are easy to dose for the purpose of feeding an animal. The terms "feed pellets," "pellet" and "feed granule" can be used synonymously in this document.

The term "m%" describes the weight percentage.

The term "probiotic" refers to a group of one or more microorganisms which, when administered in sufficient quantities, have a beneficial effect on the host. It is generally stated that these are live microorganisms and that a clearly documented health effect must exist. In the context of the present invention, this term is further expanded to include supernatant and metabolites derived from these microorganisms. Commonly used probiotics are lactic acid bacteria.

The term "microorganisms" in the context of the present invention refers to the group of organisms consisting of bacteria, yeasts, algae, and fungi. Strictly speaking, protozoa, such as amoebas, and small nematodes and flatworms also belong to this group. Furthermore, in this context, different bacteria are distinguished by the term "bacterial strain." In the context of the present invention, the bacterial strains *Lactobacillus* spp., *Enterococcus* spp., and in particular *Lactobacillus acidophilus* and *Enterococcus faecium* are discussed. They belong to the order of lactic acid bacteria.

A volume in which bacteria are present and grow is referred to as a "bacterial culture." When the bacteria themselves are removed from this culture, the "supernatant" is left, or the remaining liquid. In the supernatant, "metabolites" are present, or the substances secreted by bacteria. The concentration of bacteria in the culture, or by extension in any volume, is indicated by the number of "colony-forming units" (CFU). A concentration indicated by one of these units refers to a concentration of living microorganisms where each colony-forming unit is capable of multiplying individually.

A "prebiotic" is a component that promotes the growth or activity of beneficial microorganisms and thereby provides health benefits to the host. Typically, these microorganisms are present in the host's digestive system. Prebiotics are typically non-digestible fiber components. In the context of the present invention, fructo-oligosaccharide (FOS) and mannan-oligosaccharide (MOS) are discussed.

"Fructo-oligosaccharide" (FOS) is a component naturally found in various plants and fruits, including chicory, banana, and garlic. FOS is used as a natural sweetener but also has a prebiotic effect as it is suitable as a substrate for gut bacteria and consequently supports gut health.

"Mannan-oligosaccharide" (MOS) is a component obtained from the enzymatic hydrolysis of the inner cell wall of the fungi *Paecilomyces* spp., *Saccharomyces cerevisiae,* and *Ganoderma lucidum.* MOS is a powerful immunoactivator. It can effectively bind and adsorb various pathogenic bacteria, including *Escherichia coli, Pseudomonas* spp., *Staphylococcus aureus, Salmonella* spp., *Shigella* spp., and *Vibrio* spp. As a result, MOS can effectively block the colonization of pathogens in the gastrointestinal tract and reduce infections.

The "palatability" of a feed composition indicates the enjoyment provided to the animal by tasting or feeling the flavors, texture, and/or aroma of the feed composition when consumed by the animal. The term "flavoring agent" refers to a substance that enhances the palatability of a feed and is not limited to a substance that imparts a specific taste such as a sweet, salty, bitter, sour and/or savory taste.

"Extrusion" is a forming technique in which a deformable material, in this context a feed composition, is pressed through a die. The machine that makes this possible is called the "extruder." The die contains specifically shaped holes that give the final material its shape. Extrusion can be either continuous or discontinuous. A mixture that has undergone extrusion is also called "extruded."

The term "coating" refers to an exterior layer applied around a material or object, in this context an animal feed. The coating can provide the material with a certain protection, improved and/or new properties. The device in which the coating layers are applied around the feed granule is referred to as the "coater."

"Nutrients" are substances used by living organisms to survive, grow, and reproduce. They play a crucial role in various processes, such as tissue assimilation and energy supply to the organism. The requirements for nutrient intake vary for each organism. Ideally, a nutrient composition or "nutrient profile" in the food is aimed at meeting these requirements. The extent to which nutrients can be absorbed from food is described by the term "bioavailability." The extent to which a particular nutrient, or by extension any other biological substance, can fulfill its biological function is described by the term "biological activity."

"Proteins" are the class of biological molecules consisting of polymeric chains of "amino acids." Proteins are essential nutrients that can be broken down by living organisms into amino acids to be used as building blocks and fuel.

"Oils" and "fats" are a class of biological molecules consisting of a chain of "fatty acids." The energy density of oils and fats is high, making them a very good source of energy. Certain fatty acids, including omega-3 and omega-6 fatty acids, play an essential role in a variety of metabolic functions, including the proper functioning of the central nervous system.

"Carbohydrates" are a class of biological molecules consisting of polymeric chains of "monosaccharides." They are a major source of energy for animals and humans.

"Vitamins" are organic compounds that play an essential role in living organisms and which cannot be synthesized by the organism itself. In the context of the present invention, the fat-soluble vitamins A, D, E, and K are discussed, among others. The concentration of vitamins can be expressed in IU/kg. IU stands for "International Units" and is a measure of the biological activity of, among other things, fat-soluble vitamins. The IU measurement can vary based on the biological activity, or potency, of the substance per mass or volume unit. IUs describe the biological effect that a specific dose of a substance can have on the body.

"Amino acids" are organic compounds that form the building blocks of proteins. A number of amino acids are essential in certain living organisms as they are necessary for certain metabolic functions but cannot be synthesized by the organism itself. In the context of the present invention, the amino acid taurine is discussed.

The terms "trace elements" and "minerals" refer to components that are essential for a variety of metabolic functions in living organisms, yet are only required in small amounts. Examples of trace elements include zinc, copper, and selenium. Trace elements are commonly found in the diet or can be provided through supplementation in the form of salts or oxides. In the context of the present invention, the salts iron sulfate, copper sulfate, zinc sulfate, magnesium oxide, calcium iodate, and sodium selenite are discussed.

In a first aspect, the invention relates to feed pellets for pets, such as dogs or cats, comprising a feed composition, wherein the feed composition is extruded into porous feed granules, wherein the porous feed granules are enveloped by one or more coating layers, wherein the one or more coating layers comprise an oil/fat mixture and a probiotic, which are evenly distributed over the porous volume of the entire feed granule, and wherein the feed composition further comprises a prebiotic and one or more fat-soluble vitamins, wherein the feed composition further comprises a carrier material, wherein the carrier material functions at least as a carrier material for the prebiotic and wherein the carrier material is a clay mineral selected from the group of phyllosilicates.

The well-being of pets is closely related to their diet. An appropriate feed composition for pets not only provides the necessary nutrients but also ensures a balanced gut flora. This is crucial in preventing gastrointestinal disorders. Although the composition of the endogenous flora in pets is generally quite stable, this is less the case in older, sick, or stressed animals. As a result, they form a risk group for gastrointestinal disorders and pathogenic infections.

Adding probiotics to a feed composition can improve the intestinal health of pets and therefore reduce the risk of such disorders and infections. Combining a probiotic and a prebiotic has a synergistic effect on the general health, and in particular the intestinal health, of the animal. A probiotic provides important microorganisms that support intestinal health, while a prebiotic supports these microorganisms in their growth and metabolic functions. The presence of both a pro- and prebiotic also improves the digestibility of the feed composition. Because prebiotics enhance the efficacy of probiotics, they should be used together with probiotics whenever possible.

An important factor in using probiotics in animal feeds is that the microorganisms present in the probiotic must reach the intestinal tract alive. The physiology of the digestive system in pets, particularly in dogs and cats, makes this very difficult. Moreover, during long-term storage of the feed composition, there is a similar risk of the premature death of the probiotic microorganisms, rendering them non-functional. The result is a suboptimal probiotic effect of the feed in the pet.

Extruded pellets are perceived as palatable by many pets, provide a balanced nutrient profile to the animal, are easily digestible, and are also efficiently produced. Applying a coating around the porous pellets allows the pellets to be enriched with additives that positively influence taste and/or provide additional benefits for the health and well-being of the animal. The coating can also include a protective layer to slow down oxidation processes and such, keeping the feed longer shelf-stable and palatable. A coating can consist of one or more coating layers. The one or more coating layers are applied according to the present invention through a vacuum coating process, which ensures that the ingredients of the coating are drawn deep into the feed granules. Extruded pellets have a very porous internal structure. The added liquid from the coating layers is retained in the pores of this internal structure. The purpose of vacuum coating is to use a pressure difference to press liquids through the outer layer and deep into the porous part of the pellet. The components present in the coating layer are therefore evenly distributed over the porous volume of the entire feed granule.

In a preferred embodiment, the feed pellets are produced by a method, wherein in a first step, meat (fresh or dried) is mixed with a premix into a feed composition, wherein in a next step, the mixture is extruded, and finally, the extruded porous feed granules are coated with one or more coating layers.

In a preferred embodiment, the prebiotic is contained in the premix of the feed composition. To ensure optimal retention of the prebiotic in the feed composition (e.g., the premix) and the final extruded, porous feed granules, the prebiotic is adsorbed onto a carrier material, wherein the carrier material is a clay mineral selected from the group of phyllosilicates. Binding the clay mineral to the prebiotic ensures that a stable and sufficiently high concentration of the prebiotic in the porous feed granule is guaranteed. As described above, the prebiotic supports the beneficial microorganisms (the probiotics) in their growth and metabolic functions.

In a preferred embodiment, the coating includes an oil/fat mixture. A coating layer comprising an oil/fat mixture functions as an extra protective layer that makes the feed granule more elastic, so it breaks or crumbles less easily. Fats are also needed to deliver vitamins to the animals because they are soluble in them. In one embodiment, the fat-soluble vitamins are added to the feed granule by incorporating them into the fat-containing first coating layer. In another embodiment, the fat-soluble vitamins are added to the feed granule by incorporating them into the feed composition, for example, in the premix.

Through this coating, essential fats and oils can also be added to the animal feed, contributing to a healthier and happier life for the animals. Among other things, the quality of the coat can be drastically improved by adding essential oils and fats to the pet food.

In a preferred embodiment, the coating includes a probiotic. By incorporating the probiotic in a coating, the probiotic remains viable, even during long-term storage. The probiotic has also penetrated to the core of the porous feed granule and is evenly distributed over the entire volume of it. This has the advantage that the probiotic comes into direct contact with the nutritional components present in the feed granule, which supports the viability of the probiotic. As a result, the probiotic remains intact when ingested in the gastrointestinal tract of animals. Probiotics contribute to the health of animals and specifically to intestinal health. Probiotics can also reduce the risk of gastrointestinal disorders in animals.

In a preferred embodiment, the coating comprises at least two coating layers, wherein a first coating layer includes the oil/fat mixture and is enclosed by a second coating layer comprising the probiotic.

Both the oil/fat mixture from the first coating layer and the probiotic from the second coating layer are therefore evenly distributed over the porous volume of the entire feed granule.

The feed composition of the present invention includes one or more fat-soluble vitamins, including various salts, esters, or other derivatives of the foregoing.

Fat-soluble vitamins, i.e., vitamins A, D, E, and K, play an important role in growth and development. Both inadequate and excessive intake of these vitamins can be detrimental to health. In one embodiment, the feed composition includes vitamin A and/or vitamin D and/or vitamin E and/or vitamin K. In a preferred embodiment, the feed composition includes at least vitamin D. Vitamin D, also known as calciferol, consists of a group of fat-soluble secosteroids. The two main forms are vitamin D2 (ergocalciferol) and D3 (cholecalciferol). Both vitamin D3 and vitamin D2 are commercially synthesized and found in dietary supplements or fortified foods. The D2 and D3 forms differ only in their side chain structure. The differences do not affect metabolism (i.e., activation), and both forms function as prohormones. Vitamin D, in the form of D2 or D3, is considered biologically inactive until it undergoes two enzymatic hydroxylation reactions. In one embodiment, the feed composition includes vitamin D2 and/or vitamin D3.

According to a new study, a deficiency in vitamin D could have negative consequences on the functioning of our immune system and promote the development of autoimmune diseases. A deficiency in vitamin D increases the permeability of the intestinal wall and affects the microbial composition. Together, this promotes the ability of microbes to penetrate the intestinal wall (translocation). As a result, the host's immune system is activated, ultimately leading to autoimmunity. Vitamin D3 modulates the gut flora of the upper digestive tract. This could explain why vitamin D3 has a beneficial effect on inflammatory bowel diseases and bacterial infections.

The forming of pellets (for example by pelletizing/extruding, single-screw extrusion, or twin-screw extrusion) and coating are the most important steps in the processing of animal feed. The addition of liquids, especially fats and oils, is a major challenge in animal feed production.

Vacuum coating is mainly applied for high-fat diets, such as extruded pet food. For pelletized or extruded feed, vacuum coating is based on a simple physical exchange of air within the feed pores with a liquid. In the case of extruded feed, a coating cycle begins with transferring dried pellets to the vacuum coater at a preferred temperature of 70°C, sealing the mixing vessel, and creating a vacuum. Extruded pellets are then gently mixed while the desired liquid is pumped into the coating chamber. Afterward, the vacuum is released. Initially, the air is removed from the inside of the pellets, and then releasing the vacuum ensures that the liquid penetrates deeply into the pores of the treated pellets. The extrusion and expansion process creates sufficient pore space to introduce such a high fat content. However, the obtained pellets can exhibit a significant quality defect: the leakage of oil/fat over time. With the leakage of this oil/fat from the pellets, the fat-soluble vitamins are consequently also removed from the porous feed granules. As a result, the obtained pellets can exhibit a significant quality defect over time, namely the leakage and loss of oil/fat and the components dissolved therein, particularly the one or more fat-soluble vitamins.

The present invention provides a solution for this, namely the inclusion of a clay mineral selected from the group of phyllosilicates. This clay mineral ensures optimal adsorption of the prebiotic and also promotes the retention of the oil/fat and the components dissolved therein, particularly the one or more fat-soluble vitamins.

Once coated, pellets namely tend to lose oil over time. The Oil Leakage Rate (OLR) of the pellet can be determined by any method known from the prior art. The OLR is measured at a certain relative humidity (e.g., 60%) and a certain temperature (e.g., 25°C or 40°C, where the first temperature corresponds to pellets stored in a controlled manner, while the second temperature corresponds to pellets stored in an uncontrolled manner). The mass of the pellets is determined, and they are then placed in a glass beaker with a specific volume (e.g., 250 ml) with several layers of absorbent paper (e.g., with a total mass of 2 g) at the bottom. The pellets are then incubated for a certain period (e.g., 24 hours), and then the weight of the oil that leaked during the test and was absorbed by the paper is measured.

Equation (1) provides the formula that can be used for the OLR calculation. OLR (%) = (weight of the oil absorbed by the absorbent paper (g)/weight of the pellets before leakage (g)) × 100

In one embodiment, the animal feed comprises extruded porous feed granules with an OLR of less than 2%, preferably less than 1%, measured at 25°C determined after 24 hours of incubation according to the aforementioned method. In one embodiment, the animal feed comprises extruded porous feed granules with an OLR of less than 5%, preferably less than 2%, measured at 40°C determined after 24 hours of incubation according to the aforementioned method.

The addition of additives to feed compositions (such as "carrier" substances) is known from the prior art. However, calcium carbonate (CaCOs) is often used. Calcium carbonate is a diluent used to improve the flowability of the feed composition, adjust the bulk density, or as a carrier for certain minerals. Calcium carbonate is a cheap addition and can offer benefits such as increased pH, flowability, and the ability to lower the bulk density of the premix. However, calcium carbonate can negatively affect vitamin stability due to its abrasive nature. Because of urinary problems in cats, calcium preferably comes from animal raw materials in cat food. High calcium intake also negatively affects skeletal development in large dog breeds, especially during the early growth phase.

The inventors have discovered that the addition of a clay mineral selected from the group of phyllosilicates achieves optimal adsorption of certain essential components from the feed pellets, substantially increases their retention in the feed pellets, and thus guarantees their optimal function. In particular, the addition of the clay mineral to the feed composition guarantees optimal promotion of intestinal health. The clay mineral is namely capable of ensuring optimal binding of, among other things, the prebiotic, minerals, and vitamins, and thus significantly prevents and/or reduces the loss of these components from the porous feed granules. The clay mineral is, for example, capable of reducing the leakage of fat-soluble vitamins (due to the aforementioned problem of oil/fat leakage over time) from the feed pellets. As described above, these fat-soluble vitamins play an important role in intestinal health, where, for example, a deficiency in vitamin D increases the permeability of the intestinal wall and affects the microbial composition.

Binding the clay mineral to the prebiotic also ensures that a stable and sufficiently high concentration of the prebiotic in the porous feed granule is guaranteed. As described above, the prebiotic supports the beneficial microorganisms (the probiotics) in their growth and metabolic functions.

In one embodiment, the feed composition further comprises minerals and/or amino acids, selected from the group of taurine, iron sulfate, copper sulfate, zinc sulfate, magnesium oxide, calcium iodate, sodium selenite, or combinations thereof. In one embodiment, these minerals and/or amino acids are present in a total concentration ranging from 0.001 to 0.1 m%, based on the total weight of the feed composition, taken as 100% of the weight. Minerals and vitamins are needed for various bodily functions.

The clay mineral ensures optimal binding and retention of these components in the feed pellets and guarantees that the quality and composition of the feed pellets are maintained over a longer period.

In addition to its function as a carrier material for certain essential health-promoting components from the feed composition, the clay mineral selected from the group of phyllosilicates also has a protective effect in itself to promote intestinal health. The clay material is namely capable of sequestering harmful toxins, such as mycotoxins, and thus prevents damage to the intestinal wall of the animal.

The clay mineral is also a moisture binder. The high moisture absorption capacity therefore makes the clay mineral an excellent improver of feces consistency and has a positive effect on intestinal health.

Of all minerals, silicates form the largest and most interesting and complex class of minerals on earth. A SiO₄ tetrahedron can connect with another, and so on. These silicate tetrahedrons can form complex structures. They can form single units (known as nesosilicates), double units (known as sorosilicates), chains (known as inosilicates), sheets (known as phyllosilicates), rings (known as cyclosilicates), and framework structures (known as tectosilicates).

Preferably, the clay used belongs to the family of phyllosilicates, that is, layered or sheet-like structures commonly referred to as layered silicates (LS). In this subclass, rings of tetrahedrons are connected by shared oxygen atoms with other rings on a two-dimensional plane, resulting in a sheet-like structure. The silicon-oxygen ratio is generally 1:2.5 (or 2:5) because only one oxygen atom is exclusively bonded to the silicon, and the other three are half-shared with other silicon atoms. The symmetry of the members of this group is mainly determined by the symmetry of the rings but is usually reduced to a lower symmetry by other ions and other layers. The typical crystal form of this subclass is therefore planar, flat and book-like and always shows good basal cleavage. Phyllosilicates form a large group of minerals, including micas, smectites, and kaolinites. In a preferred embodiment, the clay mineral is selected from the group of smectites. The smectite group consists of minerals with the 2:1 structure, where the interlayer includes exchangeable cations. The most common smectite minerals vary in composition between three end members: montmorillonite, beidellite, and nontronite. They are all dioctahedral but differ in the composition of the tetrahedral and octahedral sheets. In a preferred embodiment, the clay mineral comprises montmorillonite. Montmorillonite is a multifunctional clay mineral and a main component of bentonite.

Montmorillonite is used in various industrial and pharmaceutical fields due to its unique properties, including swelling and adsorption. The high adsorption capacity of montmorillonite contributes to better encapsulation and prolonged release of, for example, medicines. Additionally, montmorillonite improves the dissolution rate and bioavailability of hydrophobic components.

The quality of the clay mineral is determined by the smectite content. Preferably, the clay mineral has a smectite content of at least 50%, more preferably at least 60%, more preferably at least 70%, even more preferably at least 80%.

These smectites provide a platelet structure which ensures greater bonding. This bond allows the clay mineral to perform a carrier function. The binding capacity for toxins, such as mycotoxins and endotoxins, is also important.

The clay mineral has, in addition to its physiological effect on the animal, also an effect on the physical properties of the feed composition. It is used as a pressing aid and moisture binder. It provides better hardness and pressability of the pellets and thus improves pellet quality and pressing efficiency. Additionally, the clay mineral acts as a digestion retardant, resulting in firmer feces. The clay mineral thus has a positive effect on the overall health of the animals.

In one embodiment, the clay mineral has a concentration in the feed composition ranging from 0.01 to 10.00 m%, more preferably from 0.05 to 5.00 m%, more preferably from 0.10 to 2.00 m%, more preferably from 0.40 to 0.80 m%, such as 0.45 m% (4500 mg/kg), based on the total weight of the feed composition, taken as 100% of the weight. Such a concentration of clay mineral is extremely suitable for achieving the animal physiological health-promoting properties (adsorption of beneficial components and sequestration of unfavorable toxins), while also ensuring the optimal physical properties of the feed composition. The clay mineral is also a moisture binder, and too high a concentration of clay mineral would therefore reduce the moisture content of the feed composition too much. Too low a concentration of clay mineral may be inadequate for performing the health-promoting properties and/or insufficiently reduces the moisture content of the feed composition.

According to one embodiment of the invention, the moisture content of the extruded porous feed granules is between 20.0 m% and 25.0 m% upon leaving the extruder, based on the total weight of the feed granule, taken as 100% of the weight. In one embodiment, the feed granules have a moisture content between 1.0% and 10%, more preferably between 4.0 and 8.0%, after extrusion, expansion, and a drying cycle, based on the total weight of the feed granule, taken as 100% of the weight. In one embodiment, the feed granules have a density between 350 and 500 g/L after extrusion, expansion, and a drying cycle, based on the total weight of the feed granule, taken as 100% of the weight.

In a preferred embodiment, the clay mineral is a sodium-activated bentonite.

Because the predominant cation is monovalent (sodium), the particles easily swell in water and form separate sheets about 1 nm thick and 500 nm wide. The separation of the sheets provides an enormous surface area on which cation exchange, adsorption, and hydrogen bonding can occur. The net negative charge of bentonite attracts positively charged proteins. The immense internal surface area between the individual layers offers an abundance of binding sites. Calcium bentonite tends to clump together when swelling and offers less surface area for adsorption. Bentonite also has, compared to other carrier materials, a minimal effect on the sensory properties, allowing the feed composition to retain its desired properties. Sensory properties, especially color, aroma, and taste, are important factors influencing the acceptance of the feed composition by the animal. In addition to its function as a carrier material (carrier) for, among other things, the prebiotic and the vitamins and minerals, the sodium-activated bentonite also acts as a mycotoxin binder and forms a protective film along the intestinal wall, thereby having a positive effect on the intestinal villi.

As described above, the quality of the clay mineral is determined by the smectite content. Preferably, the sodium-activated bentonite has a smectite content of at least 50%, more preferably at least 60%, more preferably at least 70%, even more preferably at least 80%.

Combining a probiotic and a prebiotic has a synergistic effect on the general health, and in particular the intestinal health, of the animal. A probiotic provides important microorganisms that support intestinal health, while a prebiotic supports these microorganisms in their growth and metabolic functions. The presence of both a pro- and prebiotic also improves the digestibility of the feed composition.

In one embodiment, the probiotic comprises an isolated bacterial strain selected from the group of Lactobacilli, Bifidobacteria, and/or Enterococci. In one embodiment, the probiotic comprises an isolated bacterial strain chosen from the group of *Lactobacillus reuteri* NCC2581 (CNCM 1-2448), *Lactobacillus reuteri* NCC2592 (CNCM 1-2450), *Lactobacillus rhamnosus* NCC2583 (CNCM 1-2449), *Lactobacillus reuteri* NCC2603 (CNCM 1-2451), *Lactobacillus reuteri* NCC2613 (CNCM 1-2452), *Lactobacillus acidophilus* NCC2628 (CNCM I-2453), *Enterococcus faecium* SF 68 (NCIMB 10415) or combinations thereof. Bacterial strains from this group have an exceptionally good influence on the digestive system of animals, particularly pets. These bacterial strains also have a positive effect on the skin and coat of animals, as well as supporting the immune system, bone, and dental health. Adding these bacterial strains to a feed composition improves the palatability of the feed composition. Moreover, they have the effect of reducing fecal volume and have a deodorizing effect. Preferably, the probiotic comprises the bacterial strain *Enterococcus faecium* SF 68 (NCIMB 10415). In another preferred embodiment, the probiotic comprises the bacterial strain *Lactobacillus acidophilus* NCC2628 (CNCM I-2453).

In a further or other embodiment, the isolated bacterial strain is present in the feed composition at a concentration between 10⁸ and 10¹⁰ CFU/kg. At normal, daily feeding amounts, this concentration is particularly suitable for improving intestinal health in animals, optimizing the existing gut flora. Preferably, the bacterial strain is present at a concentration of at least 10⁹ CFU/kg.

According to a further or other embodiment, the probiotic further comprises at least one supernatant and at least one metabolite derived from this bacterial strain. The presence of supernatants and metabolites and/or other components of the bacterial culture, such as cell membranes, peptidoglycan, cytoplasm, proteins, functional metabolites, and other bioactive molecules can support and/or enhance the positive action of the probiotic.

In one embodiment, the prebiotic comprises fructo-oligosaccharide (FOS) and/or mannan-oligosaccharide (MOS). The prebiotic primarily includes FOS, which improves the palatability of the feed composition. FOS also provides optimal support for commonly occurring beneficial gut bacteria. On the other hand, the prebiotic includes MOS, which is especially beneficial for young animals with a digestive system that is still developing. MOS supports the development of a balanced, mature gut flora. The specific combination of FOS and MOS optimally supports the probiotic, allowing the microorganism to reach the pet's digestive system intact. Previously identified problems regarding long-term storage or transport through the animal's digestive system are thus overcome. The combination of FOS, MOS, and a probiotic is particularly effective for improving intestinal health and the digestibility of the feed composition. Moreover, they have a fecal-reducing effect.

A further or other embodiment includes the feed composition where the FOS is derived from an FOS source selected from the group of agave, banana, onion, garlic, asparagus, leek, chicory, or combinations thereof and has a total concentration in the feed composition ranging from 0.01 to 10.00 m%, preferably between 0.10 and 5.00 m%, based on the total weight of the feed composition, taken as 100% of the weight. Using an FOS source from this group has the advantage of being a natural source, which also serves as a carbohydrate, fat, and/or protein source. Using a product from this group also positively influences palatability. Natural ingredients are also preferred as they have a positive market image compared to chemically produced components. Preferably, the FOS source is chicory, more preferably dried chicory. The concentration of FOS in the feed composition is preferably between 0.10 m% and 5.00 m%, based on the total weight of the feed composition, taken as 100% of the weight. This concentration guarantees an optimal balance between functional performance and palatability.

A further or other embodiment includes the feed composition where the MOS is derived from a microorganism selected from the group of *Paecilomyces* spp., *Saccharomyces cerevisiae,* Ganoderma lucidum, or combinations thereof and has a total concentration in the feed composition ranging from 0.01 to 10.00 m%, preferably between 0.10 m% and 5.00 m%, more preferably between 0.10 m% and 5.00 m%, based on the total weight of the feed composition, taken as 100% of the weight. Preferably, the concentration of MOS in the feed composition is between 0.10 m% and 5.00 m%, based on the total weight of the feed composition, taken as 100% of the weight.

According to a further or other embodiment, the feed composition has a crude protein content ranging from 10.00 m% to 55.00 m%, more preferably between 15.00 m% and 50.00 m%, even more preferably between 18.00 m% and 45.00 m%, based on the total weight of the feed composition, taken as 100% of the weight. In one embodiment, the feed composition includes a protein source selected from the group of animal and/or plant proteins. In one embodiment, the feed composition includes a protein source selected from the group of poultry meal (chicken, turkey, duck, etc.), pork meal, lamb meal, rabbit meal, beef meal, fish meal, insect protein, potato protein, pea protein, and corn gluten. In one embodiment, the composition includes a protein source selected from the group of duck meal, potato protein or tubermine, fish meal, pea protein, turkey meal, or combinations thereof. Proteins are important macronutrients that contribute to, among other things, the assimilation and maintenance of muscles, play a role in various metabolic processes, and are generally used as building blocks and fuel. They are therefore an essential part of a balanced pet food. Within this concentration range, sufficient proteins are provided for efficient maintenance. Moreover, protein sources chosen from this product group include high-quality protein and are also a source of essential amino acids, supporting the overall health of the pet.

According to a further or other embodiment, the feed composition has a crude fat content ranging from 1.00 to 40.00 m%, more preferably between 2.00 and 30.00 m%, more preferably between 5.00 and 30.00 m%, based on the total weight of the feed composition, taken as 100% of the weight. In one embodiment, the feed composition includes a fat source selected from the group of animal and/or plant fats. In one embodiment, the feed composition includes a fat source selected from the group of fish oil, sunflower oil, duck slurry, chicken fat, linseed, or combinations thereof. Fats and oils are essential components of animal nutrition. They are not only the most powerful energy sources but also sources of essential nutrients such as omega-3 and omega-6 fatty acids. These fatty acids are crucial for keeping the skin and coat of dogs and cats healthy and also play an important role in regulating the immunity of pets. A crude fat content within this concentration range, derived from fat sources from this product group, provides an optimal amount of essential oils and fats for the benefit of the pet. Metabolic functions are optimally supported, and the quality of skin and coat is improved. At the same time, these oils and fats form an important energy source for the pet, benefiting the animal's vitality.

According to a further or other embodiment, the feed composition has a crude carbohydrate content ranging from 15.00 to 75.00 m%, more preferably between 20.00 and 70.00 m%, based on the total weight of the feed composition, taken as 100% of the weight. In one embodiment, the feed composition includes a carbohydrate source selected from the group of grains, grasses, vegetables, roots, and tubers. In one embodiment, the feed composition includes a carbohydrate source selected from the group of brown rice, oats, sweet potato, tapioca starch, or combinations thereof. Carbohydrates form a second important source of energy. The presence of carbohydrates from the above product group and in this concentration range provides sufficient energy, which is also released slowly throughout the day.

In various embodiments, the feed composition contains additional ingredients such as (water-soluble) vitamins, minerals, amino acids, nucleic acids, fillers, flavor enhancers, binders, aromas, stabilizers, emulsifiers, sweeteners, colorants (e.g., titanium dioxide), buffers, salts, coatings, spices, preservatives, and the like known to those skilled in the art. Non-limiting examples of additional minerals include calcium, phosphorus, potassium, sodium, iron, chloride, boron, copper, zinc, magnesium, manganese, iodine, selenium, and the like. Non-limiting examples of additional vitamins include vitamin A, any of the B vitamins, vitamin C, vitamin D, vitamin E, and vitamin K, including various salts, esters, or other derivatives of the foregoing. Additional dietary supplements can also be added, for example, any form of niacin, pantothenic acid, inulin, folic acid, biotin, amino acids, and the like, as well as salts and derivatives thereof. Stabilizers include substances that extend the shelf life of the composition, such as preservatives, synergists and sequestrants, packaging gases, emulsifiers, thickeners and gelling agents. Examples of emulsifiers and/or thickeners include gelatin, cellulose ethers, starch, starch esters, starch ethers, and modified starch. The choice of ingredients and their amounts is known to those skilled in the art. The precise amounts for each additional ingredient depend on various factors, such as the ingredient in the composition, the animal species, age, body weight, general health, gender, and diet of the animal, the consumption rate of the animal, the purpose for which the feed composition is administered to the animal, and the like. Therefore, the amounts of the components and ingredients can vary widely and may deviate from the preferred ratios described herein.

In a preferred embodiment, the feed composition is formulated to provide an animal, preferably a dog or cat, with "complete and balanced" nutrition according to the standards of FEDIAF, The European Pet Food Industry Federation. Preferably, the feed compositions are nutritionally complete and provide a balanced diet, i.e., the feed composition includes, among other things, vitamins and minerals in the recommended daily amounts. The feed composition according to the present invention makes it possible to ensure an optimal concentration of the various active ingredients and thus guarantee the quality of feed granules over a longer period. The inclusion of a clay mineral selected from the group of phyllosilicates ensures optimal retention of, among other things, minerals, vitamins (particularly fat-soluble vitamins), and the prebiotic. By incorporating the probiotic in a coating, the probiotic remains viable, even during long-term storage. The probiotic has also penetrated to the core of the porous feed granule and is evenly distributed over the entire volume of it. This has the advantage that the probiotic comes into direct contact with the nutritional components present in the feed granule, which supports the viability of the probiotic. As a result, the probiotic remains intact when ingested in the gastrointestinal tract of animals. By providing such an optimal concentration of various active ingredients that play a role in intestinal health (prebiotic, probiotic, fat-soluble vitamins, and a clay mineral that functions as a carrier and as an additive to promote intestinal health), the feed composition according to the present invention offers optimal support for intestinal health.

In a further aspect, the invention relates to a method for producing feed pellets for animals, wherein the feed pellets comprise a probiotic, a prebiotic, and fat-soluble vitamins, wherein meat is mixed with a premix into a feed composition, wherein the premix comprises the prebiotic adsorbed onto a clay mineral selected from the group of phyllosilicates, wherein the mixture is extruded. In a further preferred embodiment, the extruded porous feed granules are coated with one or more coating layers comprising an oil/fat mixture and the probiotic, wherein these one or more coating layers are applied around the feed granules under a vacuum atmosphere. In one embodiment, the feed composition has a meat content ranging from 1.00 to 80.00 m%, more preferably between 5.00 and 80.00 m%, more preferably between 2.50 and 65.00 m%, based on the total weight of the feed composition, taken as 100% of the weight.

In one embodiment, a first coating layer comprising an oil/fat mixture is applied around the feed granules under a vacuum atmosphere, after which the pressure exerted on the feed granules is increased, and a second coating layer comprising a probiotic is applied.

A coating layer comprising an oil/fat mixture functions as an extra protective layer that makes the feed granule more elastic, so it breaks or crumbles less easily. This method also allows the probiotic to be quickly incorporated into the feed granule without exposing the probiotic to high temperatures and/or other adverse factors related to the prior extrusion of the feed granule.

In one embodiment, the fat-soluble vitamins are added to the feed composition (e.g., the premix) and are adsorbed onto the clay mineral in this premix. In another embodiment, the fat-soluble vitamins are added to the coating layer comprising an oil/fat mixture and are drawn deep into the pores of the treated pellets due to the vacuum coating, where they adsorb onto the clay mineral.

In one embodiment, a coating layer comprising flavorings is applied. These flavorings can be contained in a coating layer along with other components (e.g., along with the probiotic) or can be contained in a separate coating layer.

Fats and oils are essential components of animal nutrition. The method according to the present invention allows for increasing the fat and oil content in feed pellets, leading to healthier and happier animals. By applying one or more fats, oils, flavorings, probiotics, or a mixture thereof under a vacuum atmosphere to porous feed granules, these substances are drawn through the pores deep into the core of the feed granules once the pressure exerted on the feed granules is increased or the vacuum atmosphere is interrupted. The porous structure of the feed granules offers a significant increase in surface area, which, according to the present invention, is provided with at least two coating layers, allowing the components in the coating layers to be offered to the animal at a much higher level than if a feed granule without pores were used or if the coating layer were applied under atmospheric pressure. Moreover, this method allows the probiotic to be quickly incorporated into the feed granule without exposing the probiotic to high temperatures and/or other adverse factors related to the prior production of the feed granule. Probiotics contribute to the health of animals and specifically to intestinal health. Probiotics can also reduce the risk of gastrointestinal disorders in animals.

The components of the coating layers also contribute significantly to the palatability of the final feed pellets. Since a large surface area is coated according to the present invention, reaching into the core of the feed granule, the palatability of the feed pellets are also significantly increased.

The present invention not only allows for increasing the amount of fats, oils, flavorings, and/or probiotics in the feed pellets, but also improves the quality of these components when applied in a coating layer under a vacuum atmosphere. Oxidation of fats is one of the biggest challenges for preserving feed because this oxidation reduces the nutritional value of the feed by lowering the content of essential fatty acids in the feed. Applying fats and/or oils under a vacuum atmosphere according to the present invention prevents their oxidation. Moreover, this oxidation is further prevented according to the present invention by providing a shielding layer in the form of a second coating layer.

Because the components of the coating layer, when applied under a vacuum atmosphere, are pushed into the feed granule when the pressure exerted on the feed granule is increased again, less waste of coating components will also occur as there is less residual coating component left inside the coater after the coating process.

Porous feed granules are obtained according to the present invention using an extrusion process. In one embodiment of the present invention, the ingredients are first ground and optionally provided with a colorant. Subsequently, the mixture is heated by adding steam and moistened by adding water. During this process, according to a further embodiment, the mixture is further transported and mixed by two horizontal shafts rotating towards each other on which paddles are mounted. When the mixture is sufficiently warm and elastic, it is transported to the extruder, where steam and water are also added. In the extruder, the mixture is preferably transported by an Archimedes screw or an auger, but this can also be done using parallel screws, for example. The extruder consists of several compartments, and the number of flights on the screws varies so that the pressure and temperature can be regulated for each compartment. Finally, the mixture exits the extruder through a small opening formed by a die, after which the extruded mixture is cut into feed granules by rotating knives. The die determines the final shape and size of the feed pellets, along with the speed at which the knife head rotates and the number of knives attached to it.

Upon exiting the extruder, the feed granules increase significantly in volume due to the large pressure difference and the sudden evaporation of water, giving the feed granules a porous structure. In one embodiment of the invention, the moisture content of the extruded porous feed granules is between 20.00 m% and 25.00 m% upon exiting the extruder, based on the total weight of the feed granules, taken as 100% of the weight.

Preferably, the feed granules are at least partially dried before being transported to the coater. In one embodiment of the invention, the feed granules are pneumatically brought to the dryer, with a cyclone placed above the pneumatic transport system to remove fine dust particles while the feed granules fall into the dryer.

The dryer consists of one or more drying screens through which the drying air can pass. The inventors have found that drying the feed granules depends on two factors: the amount of air supplied and the temperature difference between the supplied air and the feed granules. Preferably, the temperature of the supplied air is between 80°C and 160°C, more preferably between 90°C and 145°C. Preferably, the feed granules are evenly distributed in a thin layer over a drying screen. The degree to which the feed granules are dried is monitored by a sensor and/or a timer. The sensor and/or timer determine when the feed granules leave the dryer or, if more than one drying screen is present, move from one drying screen to the next, where they are further dried in the same manner. In one embodiment, the extruded porous feed granules are dried to a moisture content between 1.00 and 10.00 m%, based on the total weight of the feed granule after drying, taken as 100% of the weight.

According to one embodiment of the invention, the moisture content of the extruded feed granules is reduced to a moisture content between 4.00% and 8.00 m%, based on the total weight of the feed granule, taken as 100% of the weight before applying the first coating layer. By reducing the moisture content in the feed granules, the nutritional value is increased; however, a lower moisture content of the feed granules also corresponds to higher oxidation of fats. The inventors have found that, at a moisture content between 4.00 m% and 8.00 m%, an optimal balance between maximum nutritional value and minimal oxidation of fats is achieved.

According to one embodiment of the invention, the feed granules are sieved after drying and before coating. This ensures that the feed granules are free of dust particles that could interfere with the coating process.

The feed granules are transported to the coater, possibly after drying and sieving. During coating, for example, oils, fats, flavorings, and/or probiotics are added to the feed granules in one or more coating layers. When the extruded porous feed granules are in the coater, the pressure in the coater is reduced to create a vacuum atmosphere in the coater.

In a further embodiment of the invention, the vacuum atmosphere is achieved at a pressure between 500 mbar and 900 mbar. The inventors have found that when the vacuum atmosphere is interrupted, the coating layer sufficiently penetrates the pores of the feed granules when the pressure of the vacuum atmosphere was at most 900 mbar. By further lowering the pressure of the vacuum atmosphere, it is possible to allow a larger amount of liquid to penetrate the feed granules when this vacuum atmosphere is interrupted or when the pressure on the feed granules is increased again. Therefore, the pressure of the vacuum atmosphere is determined by the amount of liquid to be applied as a coating layer: the lower the pressure, the greater the amount of liquid that can be drawn into the feed granules by increasing the pressure again. On the other hand, the inventors have found that when the pressure in the coater drops below 500 mbar, this imposes additional requirements on the material used, so a pressure lower than 500 mbar in the coater should be avoided. The vacuum atmosphere in the coater can be achieved using various methods known to those skilled in the art, for example, by pumping or sucking the air out of the coater.

In a further embodiment of the present invention, the oil/fat mixture is heated to a temperature between 25°C and 60°C before being applied around the feed granules. Heating liquid components often leads to a reduction in their viscosity, allowing them to be more easily spread over the feed granules. This is particularly the case with oils and fats but can also apply to other liquid components of the coating layers. A reduced viscosity also allows the liquid coating layer to be more efficiently drawn into the pores of the feed granules when the pressure exerted on the feed granules is increased or when the vacuum atmosphere in the coater is interrupted or lifted. On the other hand, the temperature of the feed granules themselves can also influence the extent to which the coating liquid penetrates the pores. Preferably, the temperature of the feed granules during coating is between 60°C and 80°C. The inventors have found that at this temperature, the pores of the feed granules are maximally open, resulting in a "sponge effect" and allowing a maximum amount of coating liquid to be absorbed into the pores.

In a further embodiment of the present invention, the feed granules are mixed during the application of a coating layer. This promotes the even distribution of the coating liquids over the feed granules. Mixing can be done using any method known to those skilled in the art, such as, but not limited to, a rotating shaft in the coater on which paddles are mounted. Another alternative may be that the coater itself is capable of rotating during the coating process. On the other hand, one may opt, according to another further embodiment, to mix the feed granules each time after applying a coating layer.

The fats, oils, probiotics, and/or flavorings are applied around the feed granules by spraying them in the coater, according to a further embodiment of the present invention. This promotes the even distribution of the coating liquid over the feed granules. The spraying of the liquids is preferably done using one or more spray nozzles, which are more preferably adapted to the viscosity of the coating liquid so that the liquid injection into the coater and the associated spraying of the coating liquid proceed optimally. According to a further embodiment, the pressure exerted on the fats, oils, and/or flavorings during spraying is between 1.5 bar and 2.5 bar. The inventors have found that liquid injection under pressure ensures good spraying, resulting in a better even distribution of coating components over the feed granules.

According to the present invention, the first coating layer comprising an oil/fat mixture is applied around the feed granules under a vacuum atmosphere. In a further embodiment, the oils and/or fats in the oil/fat mixture are selected from the group consisting of vegetable oils, fish oils, and animal fats. Vegetable oils include palm oil, coconut oil, linseed oil, rapeseed oil, sunflower oil, soybean oil, flaxseed oil, corn oil, and safflower oil. Fish oils include salmon oil, herring oil, and krill oil. Animal fats can include chicken fat, beef fat, lamb fat, and pork fat. Of course, other oils or fats are also suitable. These oils and fats are rich in omega-3 and omega-6 fatty acids, which are essential for the well-being of animals. Oil and fat are also important sources of energy; they are indispensable for healthy skin and coat and have a positive effect on the absorption of nutrients from food, such as fat-soluble vitamins.

The oil/fat mixture can also include trace elements, according to a further embodiment of the present invention. Trace elements or microminerals are essential components that must be present in small amounts in the animal's daily feed to prevent the animal from becoming ill due to a deficiency. Trace elements include, but are not limited to, iron, copper, zinc, manganese, molybdenum, selenium, cobalt, iodine, fluorine, chromium, nickel, silicon, tin, and vanadium, whether or not in the form of an organic compound. According to a further embodiment of the present invention, the oil/fat mixture also includes antioxidants and/or other preservatives. As indicated above, the oxidation of fats is one of the biggest challenges for preserving feed because this oxidation reduces the nutritional value of the feed by lowering the content of essential fatty acids in the feed. Adding antioxidants and/or other preservatives to the oil/fat mixture has an added positive effect on the nutritional value of the feed by preventing the oxidation of fats. Antioxidants can be synthetic in nature or of natural origin, such as flavonoids, carotenoids, tocotrienols, tocopherols, and terpenes (such as astaxanthin). Of course, the use of other antioxidants is also possible.

After applying a first coating layer comprising an oil/fat mixture around the feed granules under a vacuum atmosphere, the pressure exerted on the feed granules is increased, or the vacuum atmosphere is interrupted. Increasing the pressure in the coater ensures that the coating liquid is pushed deep into the pores of the feed granules. Preferably, the breaking of the vacuum atmosphere is done by gradually increasing the pressure exerted on the feed granules until atmospheric pressure is reached, as an abrupt increase in pressure could damage the coated feed pellets. The gradual increase in pressure in the coater is achieved by gradually allowing air back into the coater. This air can consist of ambient air, whether or not filtered, or can consist of an inert gas such as nitrogen or carbon dioxide, where the choice is often influenced by the specific composition of the coating liquids used. In a further embodiment of the present method, the vacuum atmosphere is broken in two steps, with the pressure difference between the different steps being between 200 mbar and 300 mbar.

After applying a first coating layer, according to the present invention, at least one additional coating layer is applied around the feed granules comprising a probiotic and one or more flavorings. In a further embodiment, before applying a second coating layer comprising one or more flavorings, the application of the first coating layer as discussed above can be repeated. This allows a higher amount of the first coating liquid to be absorbed into the porous feed granules, so that feed pellets with higher oil and/or fat content can be obtained in this way. Preferably, the feed granules remain in the coater for at least 60 seconds. This time will increase as the number of coating layers applied around the feed granule increases.

Dogs and cats have different preferences regarding the palatability of feed pellets. For example, cats will attach more importance to the aroma of the feed pellets, while dogs usually prefer feed pellets with a high fat content and animal fat. The composition of the coating layers according to the present invention is therefore adjusted according to the animal.

In a further embodiment of the present invention, the second coating layer is applied around the feed granules, whether or not under a vacuum atmosphere, after which the pressure exerted on the feed granules is increased, or the vacuum atmosphere is broken as described above. In a further preferred embodiment of the present invention, a first coating layer comprising an oil/fat mixture is applied around the feed granules at a pressure between 500 mbar and 750 mbar, after which the pressure exerted on the feed granules is increased to a pressure between 750 mbar and 950 mbar. Under this vacuum atmosphere, a second coating layer is then applied, comprising liquid flavorings, a probiotic, a prebiotic, and/or an oil/fat mixture, after which the vacuum atmosphere is broken by increasing the pressure exerted on the feed granules to atmospheric pressure. Finally, the feed granules are provided with a third coating layer comprising powders at this atmospheric pressure. These powders can be, for example, flavorings, a probiotic, and/or trace elements, but can also be other powders that further contribute to the nutritional value or palatability of the feed pellets.

In a further embodiment, the flavorings are selected from the group of sweeteners, including honey, sugar, and syrup; vitamins, including vitamin A, vitamin D, vitamin E, vitamin K, vitamin B1, vitamin B2, niacin, pantothenic acid, vitamin B6, biotin, folic acid, vitamin B12, vitamin C, and choline; and aromatic solutions, including fat solutions. Of course, other flavorings that contribute to the palatability of the feed pellets are also suitable as coating components.

In addition to the taste and aroma of the feed pellets, the texture, size, appearance (color and shape) also contribute to the animal's willingness to consume the feed pellets. The moisture content of the feed pellets have a significant impact on this and is influenced by the extrusion process and the coating process.

In one embodiment, the moisture content of the feed pellets provided with a coating is between 2.00 m% and 20.00 m%, based on the total weight of the feed pellets, taken as 100% of the weight.

When feed granules are properly cooled, the likelihood of breakage and microbial spoilage is reduced; additionally, the final moisture content and temperature of the feed granule are important for the quality of the feed granule. The increase in temperature during the pelletizing causes denaturation of proteins in the feed. During cooling, the protein reassociates, and new bonds are formed between feed particles, which is beneficial for the hardness and abrasion resistance of the feed granule. In a preferred embodiment, the feed pellets are cooled after drying and/or coating.

Cooling the feed pellets until its temperature is equal to the ambient temperature or approximately 20°C is preferably achieved by distributing the feed pellets over support screens and passing cooling air through them. Preferably, the temperature of the supplied air is between 5°C and 15°C. On the other hand, pre-cooled air can also be used for this purpose. In a further embodiment, the cooling air is reused as drying air after cooling.

In a preferred embodiment, a feed composition is produced according to the first aspect of the present invention using the method. The vacuum coating process ensures an even distribution of the first and second coating layers over the entire volume of the feed granule, resulting in improved stability of the probiotic in the feed granule. As a result, the probiotic remains viable for longer, both during long-term storage and during transport through the animal's gastrointestinal tract.

In what follows, the invention will be described by way of non-limiting examples illustrating the invention, and which are not intended to and should not be interpreted as limiting the scope of the invention.

### EXAMPLES

### EXAMPLE 1:

In a preferred embodiment, the present invention comprises a feed composition comprising:
- Fresh and dried meat (5.0 m%-80 m%, based on the total weight of the feed composition, taken as 100% of the weight);
- A probiotic: an isolated bacterial strain, specifically *Enterococcus faecium* SF 68 (NCIMB 10415) with a concentration of 10⁹ CFU/kg. This bacterial strain has a particularly good influence on the digestive system of animals and is easily incorporated into the existing gut flora;
- A first prebiotic: dried chicory (a natural source of FOS and inulin); with a concentration of 60 m% FOS;
- A second prebiotic: a total concentration between 5 and 30 m% of MOS derived from a microorganism selected from the group of *Paecilomyces* spp., *Saccharomyces cerevisiae,* Ganoderma lucidum, or combinations thereof as a prebiotic;
- Fat-soluble vitamins: vitamin A (15,000 IU/kg), vitamin D3 (1,500 IU/kg), vitamin E (alpha-tocopherol acetate, 150 IU/kg);
- A clay mineral selected from the group of phyllosilicates: sodium bentonite (0.4 - 0.8 m%, based on the total weight of the feed composition, taken as 100% of the weight);
- Amino acids and trace elements: taurine (1,500 mg/kg), iron sulfate (100 mg/kg), copper sulfate (10 mg/kg), zinc sulfate (125 mg/kg), magnesium oxide (30 mg/kg), calcium iodate (1.5 mg/kg), sodium selenite (0.2 mg/kg);
- Crude fat/oil (15 m%, based on the total weight of the feed composition, taken as 100% of the weight);
- Essential fatty acids: Omega 3 fatty acids (0.7 m%) and Omega 6 fatty acids (2.7 m%) based on the total weight of the feed composition, taken as 100% of the weight.

In a first step, the meat (fresh and dried) is mixed with a premix. The premix includes, among other things, the prebiotics, the fat-soluble vitamins, taurine, and the trace elements. These components are adsorbed onto the sodium bentonite. The inventors have discovered that the addition of a clay mineral selected from the group of phyllosilicates achieves optimal adsorption of certain essential components from the feed composition, substantially increases their retention in the feed composition, and thus guarantees their optimal function. In particular, the addition of sodium bentonite to the feed composition guarantees optimal promotion of intestinal health. The clay mineral is namely capable of ensuring optimal binding of, among other things, the prebiotic, minerals, and vitamins, and thus significantly prevents and/or reduces the loss of these components from the porous feed granules of the feed composition. The clay mineral is, for example, capable of reducing the leakage of fat-soluble vitamins from the feed composition. These fat-soluble vitamins play an important role in intestinal health, where, for example, a deficiency in vitamin D increases the permeability of the intestinal wall and affects the microbial composition. Binding the clay mineral to the prebiotic also ensures that a stable and sufficiently high concentration of the prebiotic in the porous feed granule is guaranteed. As described above, the prebiotic supports the beneficial microorganisms (the probiotics) in their growth and metabolic functions.

The clay mineral ensures optimal binding and retention of these components in the feed composition and the final feed pellets and guarantees that the quality and composition of the feed composition are maintained over a longer period. In addition to its function as a carrier material for certain essential health-promoting components from the feed composition, the clay mineral itself also has a protective effect to promote intestinal health. The clay material is namely capable of sequestering harmful toxins, such as mycotoxins, and thus prevents damage to the intestinal wall of the animal. The clay mineral also functions as a moisture binder. The high moisture absorption capacity therefore makes the clay mineral an excellent improver of feces consistency and has a positive effect on intestinal health.

The ingredients are first ground and optionally provided with a colorant. Subsequently, the mixture is heated by adding steam and moistened by adding water. During this process, the mixture is further transported and mixed by two horizontal shafts rotating towards each other on which paddles are mounted. When the mixture is sufficiently warm and elastic, it is transported to the extruder, where steam and water are also added. Finally, the mixture exits the extruder through a small opening formed by a die, after which the extruded mixture is cut into feed granules by rotating knives. Upon exiting the extruder, the feed granules increase significantly in volume due to the large pressure difference and the sudden evaporation of water, giving the feed granules a porous structure. The moisture content of the extruded porous feed granules is between 20.00 m% and 25.00 m% upon exiting the extruder, based on the total weight of the feed granules, taken as 100% of the weight.

Subsequently, the feed granules are partially dried before being transported to the coater. For this purpose, the feed granules are evenly distributed in a thin layer over a drying screen, and air with a temperature between 90°C and 145°C is supplied. The moisture content of the extruded feed granules is reduced to a moisture content between 4% and 8% before applying the first coating layer. By reducing the moisture content in the feed granules, the nutritional value is increased; however, a lower moisture content of the feed granules also corresponds to higher oxidation of fats. The inventors have found that, at a moisture content between 4% and 8%, an optimal balance between maximum nutritional value and minimal oxidation of fats is achieved.

When the extruded porous feed granules are in the coater, the pressure in the coater is reduced (to a pressure between 500 mbar and 900 mbar) to create a vacuum atmosphere in the coater. The inventors have found that when the vacuum atmosphere is interrupted, the coating layer sufficiently penetrates the pores of the feed granules when the pressure of the vacuum atmosphere was at most 900 mbar. By further lowering the pressure of the vacuum atmosphere, it is possible to allow a larger amount of liquid to penetrate the feed granules when this vacuum atmosphere is interrupted or when the pressure on the feed granules is increased again. Therefore, the pressure of the vacuum atmosphere is determined by the amount of liquid to be applied as a coating layer: the lower the pressure, the greater the amount of liquid that can be drawn into the feed granules by increasing the pressure again. On the other hand, the inventors have found that when the pressure in the coater drops below 500 mbar, this imposes additional requirements on the material used, so a pressure lower than 500 mbar in the coater should be avoided.

The temperature of the feed granules during coating is between 60°C and 80°C. The inventors have found that at this temperature, the pores of the feed granules are maximally open, resulting in a "sponge effect" and allowing a maximum amount of coating liquid to be absorbed into the pores. The feed granules are mixed during the application of one or more coating layers. This promotes the even distribution of the coating liquids over the feed granules. The fats, oils, probiotics, and flavorings are applied around the feed granules by spraying them in the coater. This promotes the even distribution of the coating liquid over the feed granules. The pressure exerted on the fats, oils, and flavorings during spraying is between 1.5 bar and 2.5 bar. The inventors have found that liquid injection under pressure ensures good spraying, resulting in a better even distribution of coating components over the feed granules.

A first coating layer comprising an oil/fat mixture is applied around the feed granules under a vacuum atmosphere. After applying a first coating layer comprising an oil/fat mixture around the feed granules under a vacuum atmosphere, the pressure exerted on the feed granules is increased, or the vacuum atmosphere is interrupted. Increasing the pressure in the coater ensures that the coating liquid is pushed deep into the pores of the feed granules. Preferably, the breaking of the vacuum atmosphere is done by gradually increasing the pressure exerted on the feed granules until atmospheric pressure is reached, as an abrupt increase in pressure could damage the coated feed pellets. The gradual increase in pressure in the coater is achieved by gradually allowing air back into the coater. After applying a first coating layer, an additional coating layer is applied around the feed granules comprising a probiotic and one or more flavorings. The vacuum coating process ensures an even distribution of the first and second coating layers over the entire volume of the feed granule, resulting in improved stability of the probiotic in the feed granule. As a result, the probiotic remains viable for longer, both during long-term storage and during transport through the animal's gastrointestinal tract.

By providing such an optimal concentration of various active ingredients that play a role in intestinal health (prebiotic, probiotic, fat-soluble vitamins, and a clay mineral that functions as a carrier and as an additive to promote intestinal health), the feed pellets according to the present invention offers optimal support for intestinal health.

## Claims

1. Feed pellets for pets, such as dogs or cats, comprising a feed composition, wherein the feed composition is extruded into porous feed granules, wherein the porous feed granules are enveloped by one or more coating layers, wherein the one or more coating layers comprise an oil/fat mixture and a probiotic, which are evenly distributed over the porous volume of the entire feed granule, and wherein the feed composition further comprises a prebiotic and one or more fat-soluble vitamins, **characterized in that** the feed composition further comprises a carrier material, wherein the carrier material functions at least as a carrier material for the prebiotic and wherein the carrier material is a clay mineral selected from the group of phyllosilicates.

2. The feed pellets according to claim 1, wherein the clay mineral is a sodium-activated bentonite.

3. The feed pellets according to claim 2, wherein the sodium-activated bentonite comprises a smectite content of at least 80%.

4. The feed pellets according to any of the preceding claims, wherein the clay mineral has a concentration in the feed composition ranging from 0.01 to 10.00 m%, based on the total weight of the feed composition, taken as 100% of the weight.

5. The feed pellets according to any of the preceding claims, wherein the probiotic is an isolated bacterial strain selected from the group of Lactobacilli, Bifidobacteria, and/or Enterococci.

6. The feed pellets according to any of the preceding claims, wherein the prebiotic comprises fructo-oligosaccharide (FOS) and/or mannan-oligosaccharide (MOS).

7. The feed pellets according to any of the preceding claims, wherein the feed pellets have a moisture content before coating between 1.00 and 10.00 m%, based on the total weight of the feed pellets, taken as 100% of the weight, and a density between 350 and 500 g/L.

8. The feed pellets according to any of the preceding claims, wherein the coating comprises at least two coating layers, wherein a first coating layer comprises the oil/fat mixture and is enclosed by a second coating layer comprising the probiotic.

9. The feed pellets according to any of the preceding claims, **characterized in that** the probiotic comprises an isolated bacterial strain selected from the group of *Lactobacillus reuteri* NCC2581 (CNCM I-2448), *Lactobacillus reuteri* NCC2592 (CNCM I-2450), *Lactobacillus rhamnosus* NCC2583 (CNCM I-2449), *Lactobacillus reuteri* NCC2603 (CNCM I-2451), *Lactobacillus reuteri* NCC2613 (CNCM I-2452), *Lactobacillus acidophilus* NCC2628 (CNCM I-2453), *Enterococcus faecium* SF 68 (NCIMB 10415) or combinations thereof.

10. The feed pellets according to any of the preceding claims, **characterized in that** the isolated bacterial strain is present in the feed granule at a concentration between 10⁸ and 10¹¹ CFU/kg.

11. The feed pellets according to any of the preceding claims, wherein one or more coating layers comprise flavorings.

12. A method for producing feed pellets for animals, wherein the feed pellets comprise a probiotic, a prebiotic, and fat-soluble vitamins, wherein meat is mixed with a premix into a feed composition, wherein the premix comprises the prebiotic adsorbed onto a clay mineral selected from the group of phyllosilicates and wherein the mixture is extruded.

13. The method according to claim 12, wherein the extruded porous feed granules are coated with one or more coating layers comprising an oil/fat mixture and the probiotic, wherein these one or more coating layers are applied around the feed granules under a vacuum atmosphere.

14. The method according to claim 13, wherein a first coating layer comprising an oil/fat mixture is applied around the feed granules under a vacuum atmosphere, after which the pressure exerted on the feed granules is increased, and a second coating layer comprising a probiotic is applied.

15. The feed pellets according to any of claims 1-11, to improve intestinal health in dogs or cats.
